# EUROPÄISCHE PATENTSCHRIFT

(11) **EP 1 129 895 B1**
(45) Veröffentlichungstag und Bekanntmachung des Hinweises auf die Patenterteilung: **09.06.2004**
(21) Anmeldenummer: 01104250.4
(22) Anmeldetag: 22.02.2001
(51) Int. Cl.: B60N 2/58

(54) **Befestigung eines Polsterbezugs auf einer Polsterauflage, insbesondere eines Fahrzeugsitzes**
Fastener of an upholstery cover, particularly of a vehicle seat
Fixation d'un revêtement de rembourrage, en particulier d'un siège de véhicule

(30) Priorität: 01.03.2000 DE 10009923
(43) Veröffentlichungstag der Anmeldung: 05.09.2001
(73) Patentinhaber: Bayerische Motoren Werke Aktiengesellschaft, 80809 München (DE)
(72) Erfinder: Haslinger, Rudolf, 94565 Rathsmannsdorf (DE)

(56) Entgegenhaltungen:
- EP-A- 0 210 860
- EP-A- 0 566 487
- DE-A- 1 909 235
- DE-U- 7 332 499

## Beschreibung

Die Erfindung bezieht sich auf eine Befestigung eines Polsterbezugs auf einer Polsterauflage der im Oberbegriff des Patentanspruchs 1 genannten und aus der EP 0 210 860 A2 (Figuren 2 und 3) hervorgehenden Art.

Aus dieser Druckschrift ist es bekannt, einen an Polstermöbeln vorhandenen Polsterbezug durch an diesem und an der Polsterauflage vorgesehene Haftverschlüsse (sogenannte "Flächenverschlüsse") lösbar zu befestigen. Wie in Figur 3 dieser Druckschrift ersichtlich, hat die aus Schaumstoff bestehende Polsterauflage mehrere Durchgangsöffnungen, wobei die etwa rechtwinklig zur Ebene der Polsterauflage verlaufende Wandung einer Durchgangsöffnung an ihrem untenliegenden Bereich als Befestigungsfläche für einen zweiten Haftverschluss dient, während an einer vom Polsterbezug nach unten abstehenden Befestigungslasche ein erster Haftverschluss angebracht ist. Dabei haben die beiden Haftverschlüsse jeweils eine Vielzahl einander zugewandte Verhakungselemente, die durch manuelles Eindrücken des ersten Haftverschlusses (Figur 4) in den zweiten Haftverschluss miteinander verbunden werden. Da jedoch der am Polsterbezug vorgesehene erste Haftverschluss nur seitlich, also etwa rechtwinklig zu Ebene des Polsterbezugs mit dem zweiten Haftverschluss verbindbar ist, lässt sich nicht in einfacher Weise im Polsterbezug und in der Polsterauflage eine definierte Vorspannung erreichen, zumal die Verbindungslage der beiden Haftverschlüsse konstruktiv festgelegt und nur geringfügig variierbar ist. Darüber hinaus ist auch der an der Polsterauflage angebrachte zweite Haftverschluss schlecht zugänglich.

Aufgabe der Erfindung ist es daher, bei einer Polsterauflage der im Oberbegriff des Patentanspruchs 1 genannte Art den zweiten Haftverschluss derart anzuordnen, dass mit diesem der am Polsterbezug vorgesehene, erste Haftverschluss rasch und in einfacher Weise verbindbar ist.

Zur Lösung der Aufgabe sind die im Patentanspruch 1 dargelegten Merkmale vorgesehen.

Da die Befestigungsfläche für den zweiten Haftverschluss erfindungsgemäß so an der Polsterauflage vorgesehen ist, dass seine Verhakungselemente vom Polsterbezug abgewandt sind, liegt diesem der zweite Haftverschluss etwa gegenüber, so dass zum Verbinden der beiden Haftverschlüsse üblicherweise der Polsterbezug um einen Eckbereich der Polsterauflage gezogen wird und damit in den beiden Teilen eine definierte, frei wählbare Vorspannung erzeugt werden kann. Dabei wird der erste Haftverschluss nach dem Umlenken um den Eckbereich der Polsterauflage lediglich durch bloßes Drücken gegen den zweiten, polsterauflageseitigen Haftverschluss mit diesem verbunden; dieser ist auch leicht zugänglich. Hierdurch ist eine rasche und unkomplizierte Montage und Demontage von Polsterbezug und Polsterauflage durchführbar. Bei einem Fahrzeugsitz hat dies auch den Vorteil, dass der Polsterbezug bedarfsweise von einer Fahrzeug-Reparaturwerkstatt oder auch von einem handwerklich geschickten Fahrzeuginhaber selbst durchgeführt werden kann. Schließlich ist der Polsterbezug und die Polsterauflage auch leicht recyclebar, da sie keine Metallteile enthalten.

Zweckmäßigerweise ist auf der gesamten oder zumindest auf dem größten Teil der Unterseite des Sitzkissens und/oder der Rückenlehne ein großflächig gestalteter, folienartiger zweiter Haftverschluss durch Einschäumen, Kleben oder durch mechanische Befestigungsmittel festgelegt, wobei in der Polsterauflage vorgesehene Durchgangsöffnungen zum Durchführen von Befestigungslaschen und an diesen jeweils angebrachte, erste Haftverschlüsse auch im folienförmigen zweiten Haftverschluss vorgesehen sind. Hierdurch wird ein durch die jeweiligen Durchgangsöffnungen hindurchgeführter, erster Haftverschluss lediglich nach Abwinkeln gegen den zweiten Haftverschluss gedrückt, wobei durch Einleitung unterschiedlicher großer Zugkräfte in den ersten Haftverschluss in einfacher Weise eine unterschiedlich große Vorspannung in den beiden Teilen erzeugt werden kann (Merkmale der Patentansprüche 2 bis 5).

Damit auf der Polsterauflage (Sitzteil) eines Fahrzeugsitzes der Polsterbezug optimal, nämlich faltenfrei und verschiebesicher festgelegt ist, sind auf der Oberseite der Polsterauflage etwa rechteckförmig verlaufende Längs- und Quernuten ausgebildet, die mit mehreren Durchgangsöffnungen versehen sind. Dabei sind auf der Unterseite des Polsterbezugs jeweils im Bereich der Längs- und Quernuten liegende Befestigungsstreifen angebracht, an denen ihrerseits jeweils im Bereich einer Durchgangsöffnung eine Befestigungslasche festgelegt ist. Diese hat an ihrem freien Endabschnitt jeweils einen ersten, streifenförmigen Haftverschluss (Merkmale des Patenanspruchs 6).

Dabei wird nach dem Auflegen des Polsterbezugs auf der Oberseite der Polsterauflage manuell oder durch eine Vorrichtung jeweils eine Befestigungslasche durch eine Durchgangsöffnung der Polsterauflage geführt und sodann durch ein bloßes Abwinkeln des ersten Haftverschlusses dieser gegen den zweiten Haftverschluss gedrückt, so dass die Polsterauflage verschiebesicher festgelegt ist. Durch das Einleiten von unterschiedlich großer Zugkraft in die ersten Haftverschlüsse kann hierbei vorteilhafterweise die Vorspannung im Polsterbezug und vor allem in der Posterauflage beliebig gewählt werden. Diese kann dabei aus Leder, Kunstleder, Stoff oder dergleichen bestehen. Zur Demontage des Polsterbezugs werden lediglich die ersten Haftverschlüsse vom zweiten Haftverschluss abgezogen und anschließend der Polsterbezug mit Befestigungslaschen und erste Haftverschlüsse von der Polsterauflage entfernt (Merkmale des Verfahrensanspruch 7).

Schließlich kann auch an dem Umfangsrändern der Polsterauflage des Sitzteils und/oder der Rückenlehne eines Fahrzeugsitzes mehrere streifenförmige durchlaufend oder abschnittsweise angeordnete zweite Haftverschlüsse durch Einschäumen oder Kleben angebracht werden. Dabei sind auch an den Umfangsrändern des Polsterbezugs mehrere streifenförmige, erste Haftverschlüsse angebracht, die jeweils den zweiten Haftverschlüssen zugeordnet und mit diesen dadurch in einfacher Weise durch bloßes Andrücken lösbar verbindbar sind. Vorteilhafterweise ist somit auch der Randbereich des Polsterbezugs mit dem Sitzteil und/oder der Rückenlehne eines Fahrzeugsitzes rasch und in einfacher Weise befestigbar.

Ein Ausführungsbeispiel der Erfindung ist in der Zeichnung dargestellt und wird im Folgenden erläutert. Es zeigt:
- Figur 1: eine perspektivische Darstellung eines Fahrzeugsitzes mit erfindungsgemäß festgelegtem Polsterbezug,
- Figur 2: einen Schnitt längs der Linie II-II in Figur 1 in größer Darstellung,
- Figur 3: eine Teildraufsicht zu Figur 2, jedoch ohne Polsterbezug,
- Figur 4: eine vergrößerte Einzeldarstellung eines Befestigungsstreifens mit Befestigungslasche sowie an dieser vorgesehenem ersten Haftverschluss.

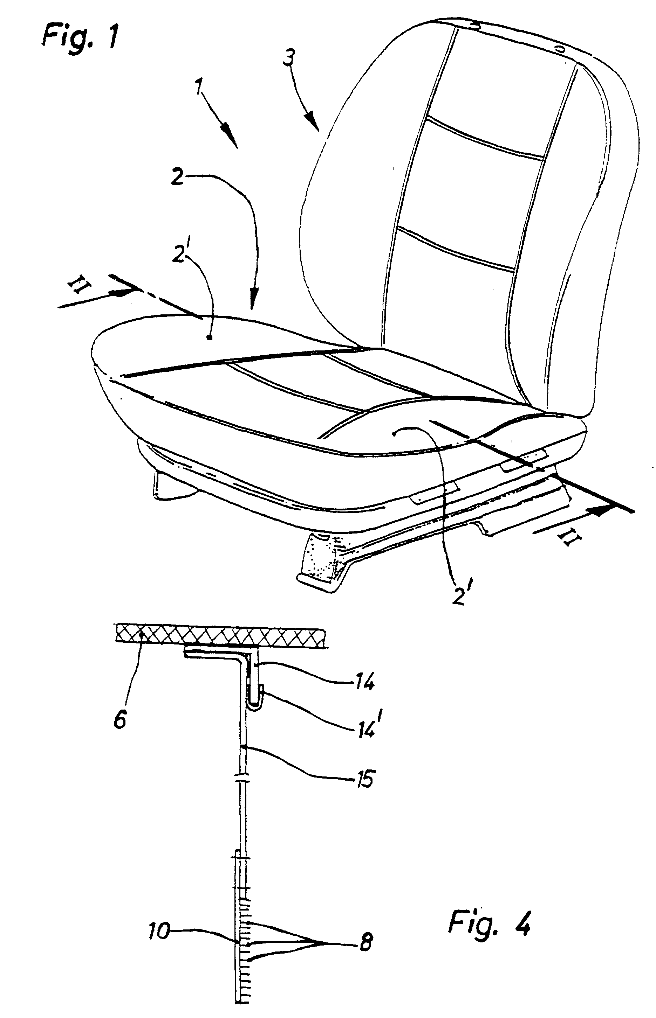

Der in Figur 1 dargestellte Fahrzeugsitz 1 besteht aus einem Sitzteil 2 und einer Rückenlehne 3, die beide hinsichtlich der Polsterung gleichartig aufgebaut sind. Daher trifft die im Folgenden dargelegte Beschreibung über den Aufbau des Sitzteils 2 auch für die Rückenlehne 3 zu.

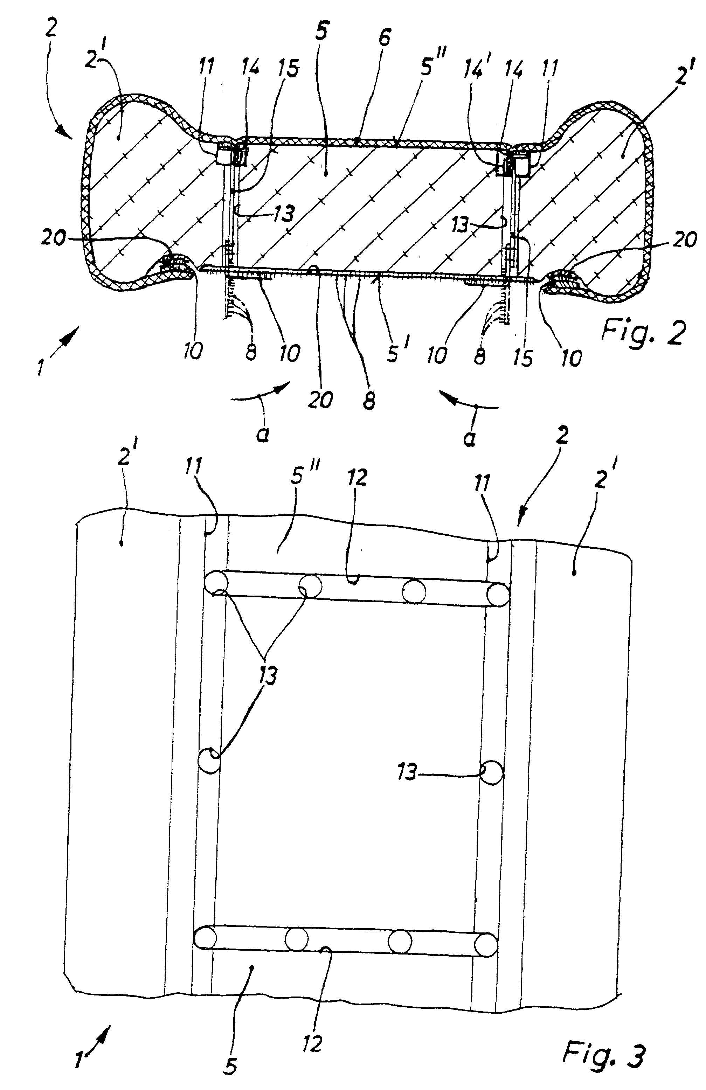

Wie in Figur 2 ersichtlich, weist das Sitzteil 2 eine aus Schaumstoff bestehende Polsterauflage 5 auf, die größtenteils von einem aus Leder, Kunststoff, Stoff oder dergleichen bestehenden Polsterbezug 6 überdeckt ist. Dieser ist mit der Polsterauflage 5 lösbar verbunden, wobei an deren Unterseite 5' eine sich über deren gesamten Mittelbereich erstreckende und damit großflächig gestaltete Klettfolie eingeschäumt ist. Dabei bildet die Klettfolie einen zweiten Haftverschluss 20, der mit einer Vielzahl nach unten abstehende und damit vom Polsterbezug 6 abgewandten Verhakungselemente 8 versehen ist.

In den Figuren 2 und 3 ist ferner ersichtlich, dass an der Oberseite 5" der Polsterauflage 5 zwei, in parallelem Abstand verlaufende sowie benachbart der Seitenteile 2' des Sitzteils 2 liegende Längsnuten 11 vorgesehen sind. Rechtwinklig zu diesen sind auch an der Oberseite 5" der Polsterauflage 5 zwei, im Abstand voneinander angeordnete Quernuten 12 ausgebildet, die kürzer sind als die Längsnuten 11 und mit diesen damit ein Rechteck bilden. Dabei sind in der Polsterauflage 5 zweckmäßigerweise im Bereich der Schnittpunkte der Längs- und Quernuten 11 und 12 sowie im Bereich von deren Längserstreckung mehrere Durchgangsöffnungen 13 vorgesehen; diese können natürlich auch an beliebig anderen Stellen der Längsund Quernuten 11 und 12 angeordnet werden.

Wie ferner in Figur 2 und insbesondere in Figur 4 ersichtlich, sind an der Unterseite des Polsterbezugs 6 vier, sich jeweils im Bereich der Längs- und Quernuten 11 und 12 befindende Befestigungsstreifen 14 durch Nähen, Kleben oder dergleichen angebracht, die aus flexiblem Material bestehen und an ihrem freien Rand mit einem aus Kunststoff bestehenden, U-förmigen Randverstärker 14' versehen sind. Ferner sind an den Befestigungsstreifen 14 mehrere, sich jeweils im Bereich einer Durchgangsöffnung 13 befindende Befestigungslaschen 15 durch Nähen, Kleben oder dergleichen befestigt, die vom Polsterbezug 6 senkrecht nach unten abstehen. Dabei ist am freien Endabschnitt der Befestigungslaschen 15 jeweils ein streifenförmig gestalteter, erster Haftverschluss 10 durch Nähen, Kleben oder dergleichen befestigt, der eine Längserstreckung von beispielsweise etwa 10 cm hat.

Schließlich ist auch in Figur 2 zu ersehen, dass auch an den untenliegenden Umfangsrändern der Polsterauflage 5, benachbart den Durchgangsöffnungen 13, jeweils streifenförmig gestaltete zweite Haftverschlüsse 20 festgelegt sind, die durchlaufend oder abschnittsweise angeordnet sind. Wie im Folgenden erläutert wird, sind mit diesen jeweils die am Randbereich des Polsterbezugs 6 auf dessen Innenseite angebrachte, erste Haftverschlüsse 10 lösbar verbindbar, wobei auch diese streifenförmig gestaltet sind und durchlaufend oder abschnittsweise angeordnet sind.

Zum Befestigen des Polsterbezugs 6 auf der Polsterauflage 5 (Figur 2) werden zunächst die Befestigungslaschen 15 mit den ersten Haftverschlüssen 10 manuell oder durch eine geeignete Vorrichtung so weit durch die Durchgangsöffnungen 13 der Polsterauflage 5 hindurchgeführt, bis die ersten Haftverschlüsse 10 über die Unterseite 5' hinausragen. Zweckmäßigerweise wird nunmehr der Randbereich des Polsterbezugs 6 durch Andrücken der ersten Haftverschlüsse 10 gegen die polsterauflageseitigen zweiten, Haftverschlüsse 20 festgelegt. Natürlich kann auch der Randbereich des Polsterbezugs 6 durch andere, nicht dargestellte Befestigungsmittel an der Polsterauflage 5 festgelegt werden. Nunmehr wird der Polsterbezug 6 exakt an der Oberseite 5" der Polsterauflage 5 positioniert und gegebenenfalls vorhandene Falten oder dergleichen ausgeglichen. Daraufhin werden die an den Befestigungsstreifen 14 vorgesehenen U-förmigen Randverstärker 14' in die Längsund Quernuten 11 und 12 manuell gedrückt und sodann die ersten Haftverschlüsse 10 gegen die Polsterauflage 5 gezogen, wodurch in der Polsterauflage 5 eine Vorspannung entsteht. Schließlich werden die ersten Haftverschlüsse 10 unter Beibehaltung der in sie eingeleiteten Zugkraft in Pfeilrichtung a zum großflächigen zweiten Haftverschluss 20 hin verlagert, also abgewinkelt, und gegen diesen gepresst, so dass die Verhakungselemente 8 der beiden Haftverschlüsse 10 und 20 miteinander verkettet werden. Durch die bei Montage des Polsterbezugs 6 in der Polsterauflage 5 entstehende Vorspannung werden die Haftverschlüsse 10 und 20 hauptsächlich auf Scherung belastet, wobei jedoch kaum Schälkräfte entstehen. Darüber hinaus werden auch unangenehme Geräusche, die durch Knarzen oder dergleichen entstehen, im Bereich der lösbaren Verbindung von erstem und zweitem Haftverschluss 10 und 20 vermieden.

## Patentansprüche

1. Polsterauflage (5) mit Polsterbezug (6), insbesondere eines Fahrzeugsitzes, wobei am Polsterbezug (6) wenigstens ein erster Haftverschluss (10) angebracht ist, der mit einem zweiten, sich an einer Befestigungsfläche der Polsterauflage (5) befindenden Haftverschluss (20) über an den Haftverschlüssen vorgesehene Verhakungselemente (8) lösbar verbindbar ist, **dadurch gekennzeichnet, dass** die Befestigungsfläche (Unterseite 5') derart an der Polsterauflage (5) angeordnet ist, dass die Verhakungselemente (8) des zweiten Haftverschlusses (20) vom Polsterbezug (6) abgewandt sind.

2. Polsterauflage nach Anspruch 1, **dadurch gekennzeichnet, dass** der zweite Haftverschluss (20) an der Unterseite (5') der Polsterauflage (5) angebracht ist.

3. Polsterauflage nach Anspruch 2, wobei in der Polsterauflage mindestens eine Durchgangsöffnung vorgesehen ist, **dadurch gekennzeichnet, dass** sich der zweite Haftverschluss (20) im Umfangsbereich der Durchgangsöffnung (13) befindet.

4. Polsterauflage nach Anspruch 2, **dadurch gekennzeichnet, dass** der zweite Haftverschluss (20) großflächig gestaltet ist, der sich als ein solcher zumindest über den größten Teil der Unterseite (5') der Polsterauflage (5) erstreckt, und an dieser durch Einschäumen, Kleben oder dergleichen befestigt ist.

5. Polsterauflage nach einem der Ansprüche 1 bis 3, **dadurch gekennzeichnet, dass** an der Unterseite des Polsterbezugs (6) zumindest ein Befestigungsstreifen (14) angebracht ist, an dem ein oder mehrere, im Abstand voneinander angeordnete Befestigungslaschen (15) angebracht sind, welche an ihren freien Endabschnitten jeweils einen ersten Haftverschluss (10) aufweisen, wobei die Befestigungslaschen (15) jeweils eine Durchgangsöffnung (13) der Polsterauflage (5) durchsetzen und dabei ferner die ersten Haftverschlüssen (10) mit dem an der abgewandten Seite der Polsterauflage (5) vorgesehenen, zweiten Haftverschluss (20) lösbar verbunden sind.

6. Polsterauflage nach Anspruch 3 bis 5, **dadurch gekennzeichnet, dass**
- an der Oberseite (5") der Polsterauflage (5) wenigstens zwei, in parallelem Abstand verlaufende sowie jeweils benachbart der Seitenteile (2') des Sitzteils (2) eines Fahrzeugsitzes (1) liegende Längsnuten (11) sowie mindestens zwei, im Abstand voneinander angeordnete, etwa rechtwinklig zu diesen verlaufende Quernuten (12) ausgebildet sind,
- an den Schnittpunkten der Längs- und Quernuten (11 und 12) sowie in deren Längserstreckung oder an anderen Stellen der Polsterauflage (5) jeweils Durchgangsöffnungen (13) vorgesehen sind,
- an der Unterseite des Polsterbezugs (6) sich im Bereich der Längs- und Quernuten (11 und 12) befindende Befestigungsstreifen (14) mit an diesen festgelegte, U-förmige Randverstärker angebracht sind, wobei an den Befestigungsstreifen sich im Bereich einer jeden Durchgangsöffnung (13) befindende Befestigungslasche (15) festgelegt sind, welche an ihrem freien Endabschnitt jeweils einen streifenförmigen, ersten Haftverschluss (10) aufweisen.

7. Polsterauflage nach Anspruch 1, **dadurch gekennzeichnet, dass** an mehreren Umfangsrändern der Polsterauflage (5) des Sitzteils (2) mehrere streifenförmige, abschnittsweise oder durchlaufend angeordnete, zweite Haftverschlüsse (20) angebracht sind, mit denen der seinerseits mit streifenförmigen, ersten Haftverschlüssen (10) versehene Randbereich des Polsterbezugs (6) lösbar verbindbar ist.

8. Verfahren zum Befestigen eines Polsterbezugs auf einer Polsterauflage nach Anspruch 1, **dadurch gekennzeichnet, dass** eine an der Unterseite des Polsterbezugs (6) angebrachten Befestigungslasche (15) zuerst durch eine Durchgangsöffnung (13) der Polsterauflage (5) hindurchgeführt und daraufhin in die Befestigungslaschen eine gegen die Polsterauflage wirkende Zugkraft eingeleitet und dadurch in der Polsterauflage eine Vorspannung erzeugt wird und schließlich die ersten Haftverschlüsse (10) unter Aufrechterhaltung der Zugkraft in den Befestigungslaschen gegen den zweiten Haftverschluss (20) der Polsterauflage gepresst werden.

## Claims

1. An upholstery support (5) with an upholstery cover (6), especially for a vehicle seat, wherein at least a first adhesive fastener (10) is mounted on the upholstery cover (6) and is releasably connectable by hook elements (8) on the adhesive fasteners to a second adhesive fastener (20) on a surface of the upholstery support (5), **characterised in that** the fastening surface (underside 5') is so situated on the upholstery support (5) that the hook elements (8) of the second adhesive fastener (20) are turned away from the upholstery cover (6).

2. An upholstery support according to claim 1, **characterised in that** the second adhesive fastener (20) is attached to the underside (5') of the upholstery support (5).

3. An upholstery support according to claim 2, wherein at least one passage opening is formed in the support, **characterised in that** the second adhesive fastener (20) is disposed in the peripheral region of the passage opening (13).

4. An upholstery support according to claim 2, **characterised in that** the second adhesive fastener (20) covers a large area and as such extends over at least the major part of the underside (5') of the upholstery support (5) and is fastened thereto by foaming, sticking or the like.

5. An upholstery support according to claims 1 to 3, **characterised in that** at least one fastening strip (14) is attached to the underside of the upholstery cover (6) and bears one or more spaced-apart fastening lugs (15) which each have a first adhesive fastener (10) at their free end portions, wherein each fastening lug (15) extends through a passage opening (13) in the upholstery support (5) and wherein the first adhesive fasteners (10) are releasably connected to the second adhesive fastener (20) provided on the remote side of the upholstery support (5).

6. An upholstery support according to claims 3 to 5, **characterised in that**
- at least two parallel spaced-apart longitudinal grooves (11) near the sides (2') of the seat part (2) of the vehicle seat (1) and at least two spaced-apart transverse grooves (12) approximately perpendicular are formed on the top surface (5") of the upholstery support (5),
- passage openings (13) are provided at the intersections between the longitudinal and transverse grooves (11, 12) and along the length thereof or at other places on the upholstery support (5), and
- fastening strips (14) with U-shaped edge reinforcements fixed thereon are disposed on the underside of the upholstery cover (6) in the region of the longitudinal and transverse grooves (11, 12) and fastening lugs (15) are fixed to the strips near each passage opening (13) and, at least at their free end portion, each have a first adhesive fastener (10) in the form of a strip.

7. An upholstery support according to claim 1, **characterised in that** a number of second adhesive fasteners (20), discontinuous or continuous and in strip form, are provided on a number of peripheral edges of the upholstery support (5) of the seat part (2) and are releasably connectable to the edge region of the upholstery cover (6), which is also provided with first adhesive fasteners (10) in strip form.

8. A method of fastening an upholstery cover to an upholstery support according to claim 1, **characterised in that** a fastening lug (15) on the underside of the upholstery cover (6) is first inserted through a passage opening (13) in the upholstery support (5), after which a tensile force acting against the upholstery support is introduced into the fastening lugs and generates a prestress in the upholstery support and finally the first adhesive fasteners (10), while maintaining the tensile force, are pressed into the fastening lugs against the second adhesive fastener (20) of the upholstery support.

## Revendications

1. Support de rembourrage (5) avec garniture de rembourrage (6) en particulier pour un siège de voiture, tel que sur la garniture de rembourrage (6) est montée au moins une première fermeture adhésive (10), pouvant être reliée de manière amovible, par l'intermédiaire d'éléments d'accrochage 8, à une seconde fermeture adhésive (20) située sur une surface de fixation du support de rembourrage (5),
**caractérisé en ce que**
la surface de fixation (face inférieure 5') est disposée sur le support de rembourrage (5) de telle manière que les éléments d'accrochage (8) de la seconde fermeture adhésive (20) sont orientés de manière opposée à la garniture de rembourrage (6).

2. Support de rembourrage selon la revendication 1,
**caractérisé en ce que**
la seconde fermeture adhésive (20) est montée sur la face inférieure (5') du support de rembourrage (5).

3. Support de rembourrage selon la revendication 2,
où l'on a prévu, dans ledit support de rembourrage, au moins une ouverture de passage,
**caractérisé en ce que**
la seconde fermeture adhésive (20) se trouve placée dans la zone périphérique de l'ouverture de passage (13).

4. Support de rembourrage selon la revendication 2,
**caractérisé en ce que**
la seconde fermeture adhésive (20) présente une grande surface, dès lors qu'elle s'étend au moins sur la plus grande partie de la face inférieure (5') du support de rembourrage (5), et qu'elle est fixée sur celui-ci par moussage, collage ou un autre mode de fixation.

5. Support de rembourrage selon l'une des revendications 1 à 3,
**caractérisé en ce que**
sur la face inférieure de la garniture de rembourrage (6) est montée au moins une bande de fixation (14) sur laquelle est mise en place une éclisse de fixation (15) ou encore plusieurs de ces éclisses disposées à une certaine distance les unes des autres, lesquelles comportent sur leurs extrémités terminales libres au moins une première fermeture adhésive (10) ; lesdites éclisses de fixation (15) traversant à chaque fois une ouverture de passage (13) du support de rembourrage (5) ; par ailleurs, les premières fermetures adhésives (10) sont jointes de manière amovible à la seconde fermeture adhésive (20) prévue sur la face opposée du support de rembourrage (5).

6. Support de rembourrage selon l'une des revendications 3 à 5,
**caractérisé en ce que**
- sur la face supérieure (5") du support de rembourrage (5) sont constituées au moins deux rainures longitudinales (11) passant parallèlement à une certaine distance l'une de l'autre et placées à chaque fois au voisinage des parties latérales (2') de l'élément de siège (2) d'un siège de véhicule (1), ainsi qu'au moins deux rainures transversales (12) disposées à une certaine distance l'une de l'autre et orientées à peu près perpendiculairement aux dites rainures longitudinales ;
- aux points d'intersection des rainures longitudinales (11) et transversales (12), ainsi que suivant leur extension longitudinale, ou encore en d'autres endroits du support de rembourrage (5), sont prévues à chaque fois des ouvertures de passage (13) ;
- sur la face inférieure de la garniture de rembourrage (6) sont montées des bandes de fixation (14) placées au voisinage des rainures longitudinales (11) et transversales (12) et sur lesquelles sont fixées des pièces de renfort de bord en forme de U ; sur lesdites bandes de fixation sont fixées des éclisses de fixation (15) placées au voisinage de chaque ouverture de passage (13) et qui comportent à chaque fois, sur leur section terminale libre, une première fermeture adhésive (10) en forme de bande.

7. Support de rembourrage selon la revendication 1,
**caractérisé en ce que**
sur plusieurs bords périphériques du support de rembourrage (5) de l'élément de siège (2) sont montées plusieurs secondes fermetures adhésives (20), disposées par sections ou de manière continue, auxquelles la zone de bord, - pourvue de son côté de premières fermetures adhésives (10) en forme de bandes - de la garniture de rembourrage (6) peut être jointe de manière amovible.

8. Procédé de fixation d'une garniture de rembourrage sur un support de rembourrage selon la revendication 1,
**caractérisé en ce que**
l'on fait d'abord passer une éclisse de fixation (15), montée sur la face inférieure de la garniture de rembourrage (6), à travers une ouverture de passage (13) du support de rembourrage (5) ; ensuite, on introduit, dans les éclisses de fixation, une force de traction agissant à l'encontre du support de rembourrage, et l'on produit ainsi une précontrainte dans ledit support de rembourrage ; enfin, on comprime les premières fermetures adhésives (10), en maintenant la force de traction dans les éclisses de fixation, contre la seconde fermeture adhésive (20) du support de rembourrage.
